# EUROPÄISCHE PATENTSCHRIFT

(11) **EP 0 806 541 B1**
(45) Veröffentlichungstag und Bekanntmachung des Hinweises auf die Patenterteilung: **07.05.2003**
(21) Anmeldenummer: 97102110.0
(22) Anmeldetag: 11.02.1997
(51) Int. Cl.: E06B 9/386, B32B 15/08, E06B 9/15

(54) **Rolladenlamelle, Verfahren zur Herstellung einer Rolladenlamelle und Rolladenbeschichtungsanlage**
Lamella for a roller shutter, method for producing a lamella and device for coating a shutter
Lamelle pour un volet roulant, procédé de fabrication d'une lamelle et dispositif de revêtement d'un volet

(30) Priorität: 08.05.1996 DE 19618418
(43) Veröffentlichungstag der Anmeldung: 12.11.1997
(73) Patentinhaber: Baier, Paul, 77871 Renchen-Ulm (DE)
(72) Erfinder: Baier, Paul, 77871 Renchen-Ulm (DE)
(74) Vertreter: Patentanwälte Bartels und Partner

(56) Entgegenhaltungen:
- DE-A- 2 912 774
- DE-A- 4 211 125
- DE-U- 8 102 096
- GB-A- 1 024 918
- US-A- 5 453 142

## Beschreibung

Die Erfindung betrifft einen Rolladenlamelle gemäß dem Oberbegriff des Anspruchs 1, ein Verfahren zur Herstellung einer derartigen Rolladenlamelle sowie eine entsprechende Rolladenbeschichtungsanlage.

Derartige Rolladenlamellen sind bekannt. So offenbart die DE 26 22 905 A1 eine Rolladenlamelle mit einem hakenförmigen Befestigungsabschnitt. Bei einer derartigen Rolladenlamelle sind ein Metallteil und ein Kunststoffelement miteinander fest verbunden sind. Beim Metallteil handelt es sich in der Regel um Aluminium, das durch Rollverformung aus einem Aluminiumband rollgeformt wird. In dieses fertig geformte Metallteil wird ein Kunststoff, beispielsweise PVC extrudiert oder geschäumt.

Nachteil derartiger Lamellen ist, daß die Haftung des Kunststoffelements am Metallteil nicht dauerhaft ist. So sind zusätzlich mechanische Verbindungen, insbesondere in der Form von Hinterschneidungen erforderlich. Dadurch steigt der Materialbedarf und das Herstellungsverfahren wird komplizierter und teurer.

Die DE 29 12 774 A1 zeigt eine Rolladenlamelle mit einer Schutzschicht aus PVC, wobei zwischen der PVC-Schicht und dem Metallteil eine Dämmschicht angeordnet ist. Dieses Dokument lehrt, PVC sei für eine Beschichtung des Metallteils aufgrund seiner schlechten Dämmeigenschaften ungeeignet.

Die GB-A-1,024,918 zeigt ein aufrollbares Klebeband, dessen Klebeschicht entweder von einem Trägermaterial, das keine Fasern aufweist, beispielsweise einem PVC-Film, getragen wird oder von einem Trägermaterial, das Fasem aufweist, beispielsweise einem Gewebeband, getragen wird.

Die DE 42 11 125 A1 zeigt eine bestimmte Zusammensetzung eines Schmelzklebstoffes, der bei Raumtemperatur fest ist und zum Verkleben vorübergehend geschmolzen wird.

Die US 5,453,142 zeigt ein Verfahren zur Herstellung eines kompletten Rolladens, bei dem eine Vielzahl von Rolladenlamellen in Form von voneinander beabstandeten Stäben gleichzeitig und umfänglich vollständig von einem folienartigen Material bedeckt werden, welches auch die flexible Verbindung zwischen den Lamellenstäben bildet.

Der vorliegenden Erfindung liegt die Aufgabe zugrunde, die Nachteile des Standes der Technik zu beseitigen und ein einfaches und kostengünstiges Herstellverfahren für eine einfache, witterungsbeständige Rolladenlamelle sowie eine hierfür geeignete Herstellvorrichtung zur Verfügung zu stellen. Diese Aufgabe ist durch eine Rolladenlamelle mit den Merkmalen des Anspruchs 1 sowie durch ein Verfahren gemäß Anspruch 9 und eine Rollbeschichtungsanlage gemäß Anspruch 17 gelöst.

Auf besonders einfache Weise läßt sich eine Rolladenlamelle herstellen, bei der ein PVC-Band mit einem Metallteil verbunden ist. Dabei wird die Alterungsbeständigkeit des PVC-Bandes u.a. dadurch erhöht, daß ein PVC-Band mit einem Glasfaser-, Kohlefasernetz- oder einem Textilgewebe verwendet wird. Durch diese Gewebeeinlage wird der Wärmeausdehnungskoeffizient des PVC-Bandes im Bereich der Verbindung zwischen dem PVC-Band und dem Metallteil etwa dem Wärmeausdehnungskoeffizienten des Metallteils angepaßt. Temperaturbedingte Spannungen im Verbindungsbereich treten kaum noch auf.

Besonders vorteilhaft ist die Verwendung eines Schmelzklebers, wobei es sich vorzugsweise um einen reaktiven Schmelzkleber auf PUR-Basis handelt, der in einer Dicke von ca. 30 - 50 g je m² auf das Kunststoffelement aufgetragen wird. Das Auftragen des Schmelzklebers erfolgt dabei vorzugsweise bei einer Temperatur von zwischen 110 und 120 °C. Der Schmelzkleber selbst ist bis 150 °C hitzebeständig und bis -40 °C kältebeständig. Seine Schälfestigkeit beträgt ca. 3,5 N je mm².

Die Verwendung eines Aluminiumbandes als Metallteil der Rolladenlamelle ist aufgrund der Witterungsbeständigkeit des Aluminiums besonders vorteilhaft.

Ferner ist Aluminium besonders leicht und läßt sich gut mittels Rollumformung bearbeiten.

Eine Ausgestaltung gemäß der das PVC-Band bis dicht an die hakenförmigen Bereiche des Metallteils heranreichen, bewirkt, daß das PVC-Band relativ geschützt ist und nicht oder nur bedingt infolge von Relativbewegungen bezüglich angrenzender Rolladenlamellen benutzt wird. Vorzugsweise beträgt die Breite des ungerollten Metallteils etwa 51 mm, die Breite des PVC-Bandes etwa 33 mm. Dadurch ist ein Freibleiben der Randbereiche des Metallteils gewährleistet.

Die Witterungsbeständigkeit des PVC-Bandes sowie des Metallteils kann durch deren Beschichtung, beispielsweise durch eine Farbbeschichtung erhöht werden. Ferner wird die Oberfläche durch diese Beschichtung verbessert, insbesondere werden die Gleiteigenschaften optimiert.

Optimale Eigenschaften weist eine Rolladenlamelle auf, bei der das Metallteil eine Dicke von ca. 0,42 mm und das PVC-Band eine Dicke von etwa 0,6 mm aufweist.

Ein Verfahren zur Herstellung einer entsprechenden Rolladenlamelle, bei dem zuerst ein Metallband in einer Rollformmaschine rollgeformt wird, dann dieses erwärmt und mit einem einseitig mit einem Schmelzkleber beschichteten Kunststoffband in Anlage gelangt, diese beiden Bänder aneinander gepreßt werden und nach dem Aushärten direkt abgelängt werden, ermöglicht eine vollständige Automatisierung des Herstellungsverfahrens. Dabei wird die gesamte Rollbeschichtungsanlage kontinuierlich durchlaufen. Die Lagerhaltung, die bei Zwischenstationen zusätzlich erforderlich wäre, kann vollständig entfallen und der Raumbedarf für die Rollbeschichtungsanlage beschränkt sich auf eine schmale Bahn, entlang der die einzelnen Maschinen in einer Reihe angeordnet sind.

Weitere Vorteile dieses Verfahrens sind den entsprechenden Unteransprüchen zu entnehmen.

Eine Rollbeschichtungsanlage, mit der nach diesem Verfahren gearbeitet werden kann, weist entsprechende Vorteile auf. Besonders vorteilhafte Ausgestaltungsformen sind den entsprechenden Unteransprüchen zu entnehmen.

Im folgenden wird die vorliegende Erfindung anhand zweier Ausführungsbeispiele unter Bezugnahme auf die beiliegenden Zeichnungen näher erläutert. Ferner wird ein erfindungsgemäßes Herstellungsverfahren anhand einer Rollbeschichtungsanlage beschrieben. Es zeigen:
- Fig. 1: einen Querschnitt durch eine erste Ausführungsform einer Rolladenlamelle,
- Fig. 2: einen Querschnitt durch eine zweite Ausführungsform einer Rolladenlamelle und
- Fig. 3: ein Ablaufschema zur Herstellung von Rolladenlamellen.

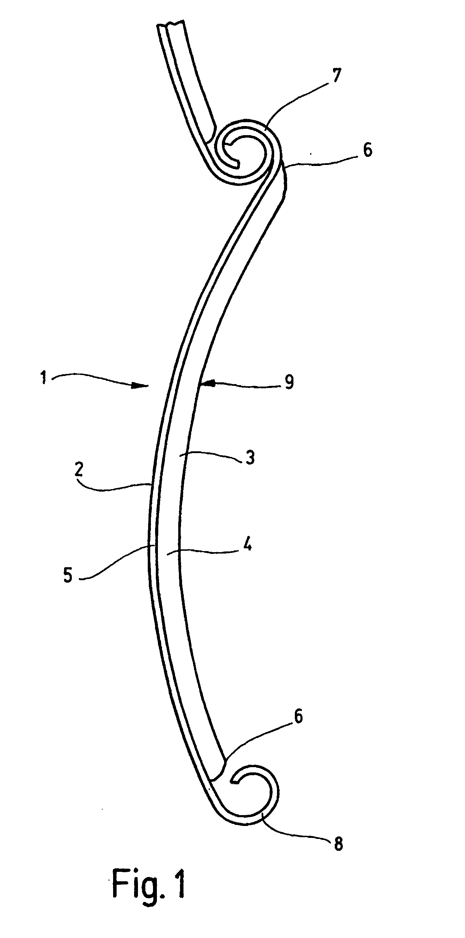

Fig. 1 zeigt eine Rolladenlamelle 1 mit einem Metallteil 2 und einem Kunststoffelement 3. In ihrer Gesamtheit bilden das Metallteil 2 und das Kunststoffelement 3 ein allgemein übliches Profil von Rolladenlamellen 1. Beim Kunststoffelement 3 handelt es sich um ein PVC-Band 4, das mit einem Kohlefasernetz verbunden ist. Das PVC-Band 4 ist einseitig mit einer Farbbeschichtung 9 versehen. Die Dicke des PVC-Bandes 4 beträgt ca. 0,6 mm, die Breite in gestrecktem Zustand ca. 33 mm. Das Metallteil 2 ist ein rollgeformtes Aluminiumband 5. Dieses Aluminiumband 5 hat eine Dicke von 0,38 mm und im umgebogenen Zustand eine Breite von ca. 51 mm. Vor seiner Verarbeitung zu Rolladenlamellen 1 wurde das Aluminiumband 5 beidseitig mit einer jeweils 0,02 mm dicken farbigen Lackschicht versehen.

Das PVC-Band 4 ragt mit seinen beiden Rändern 6 bis an im Querschnitt hakenförmige Bereiche 7 und 8 des Metallteils 2 heran. Beim ersten Ausführungsbeispiel befindet sich das PVC-Band 4 im konkaven Bereich des Metallteils 2, wodurch die Rolladenlamellen 1 für sogenannte Rechtsroller geeignet sind.

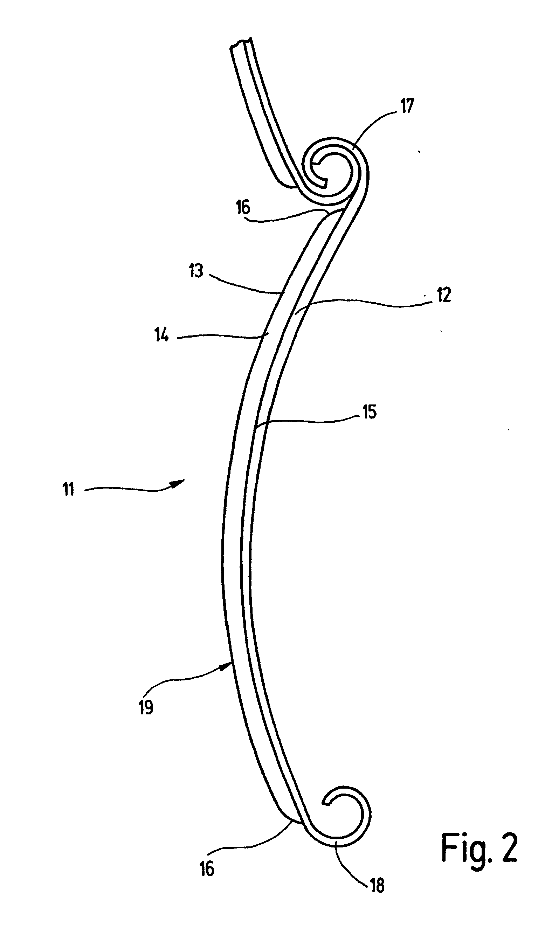

Fig. 2 zeigt eine weitere Rolladenlamelle 11 mit einem Metallteil 12, das im wesentlichen dem Metallteil 2 entspricht. Ferner ist ein Kunststoffelement 13 vorgesehen, bei dem es sich um ein mit einem Glasfasernetz verstärktes PVC-Band 14 handelt. Die Abmessungen entsprechen denen des ersten Ausführungsbeispiels. Dieses PVC-Band 14 ist im Gegensatz zum PVC-Band 4 des ersten Ausführungsbeispiels auf der konvexen Seite des Metallteils 12 angebracht. Beim Metallteil 12 handelt es sich um ein gebogenes Aluminiumband 15. Die Ränder 16 des PVC-Bandes 14 ragen bis dicht an hakenförmige Bereiche 17 und 18 des Metallteils 12 heran. Ferner ist das PVC-Band 14 auf seiner Außenseite 18 mit einer Farbbeschichtung 19 versehen. Die Rolladenlamellen 11 sind insbesondere für sogenannte Linksroller geeignet.

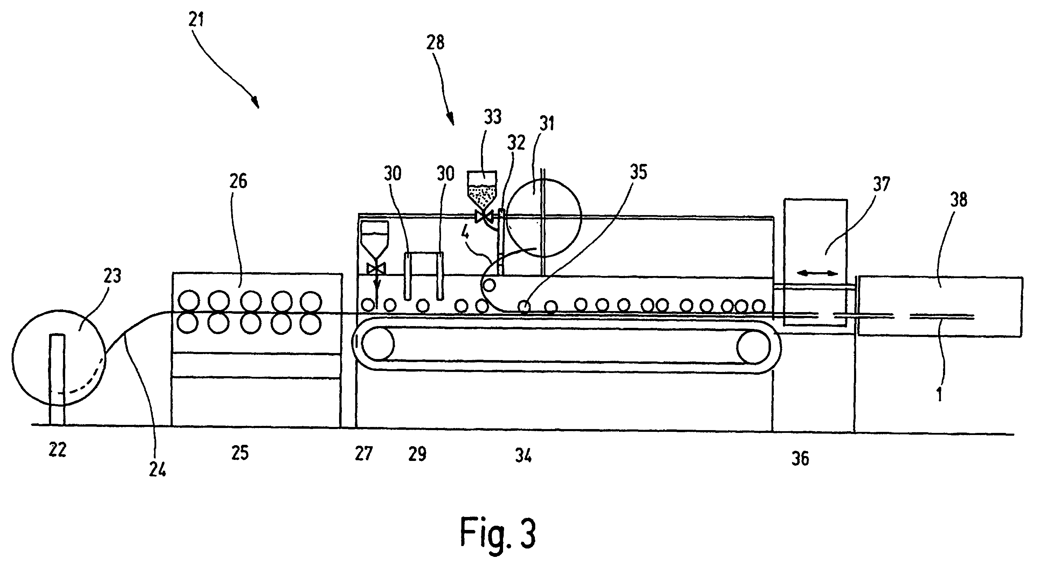

In Fig. 3 ist eine Rollbeschichtungsanlage 21 schematisch dargestellt. An der ersten Station 22 befindet sich ein Coil 23 mit einem Aluminiumband 24. Dieses Aluminiumband 24 wird vom Coil 23 abgerollt und direkt zur zweiten Station 25, nämlich direkt in die Rollformmaschine 26 eingeführt. In dieser Rollformmaschine 26 wird das Aluminiumband 24 durch Rollverformung derart gebogen, daß ein Profil entsteht, welches dem des Aluminiumbandes 5 des ersten Ausführungsbeispiels entspricht. Das umgeformte Aluminiumband 24 gelangt direkt im Anschluß an die zweite Station 25 zur dritten Station 27, die bereits zur eigentlichen Profilbeschichtungsmaschine 28 gehört. An dieser dritten Station 27 wird das Aluminiumband 24 mit einem Primer beschichtet, wodurch Fett- oder Schmutzrückstände neutralisiert werden. Der Primer basiert auf einem Polykondensationsharz und enthält als Lösungsmittel chlorierten Kohlenwasserstoff. Nach dieser Beschichtung wird das Aluminiumband 24 in der vierten Station 29 an zwei Heißluftgebläsen 30 vorbeigeführt, wodurch der Primer getrocknet und gleichzeitig das Aluminiumband 24 auf ca. 30°C vorgewärmt wird.

Von außen wird dem kontinuierlich vorwärtsbewegten Aluminiumband 24 ein PVC-Band 4 zugeführt, das in gleicher Geschwindigkeit direkt von einer Rolle 31 abgewickelt und in einem Rakel 32 mit Schmelzkleber 33 einseitig beschichtet wird. Beim Schmelzkleber 33 handelt es sich um einen reaktiven Schmelzkleber auf PUR-Basis. Beim Auftragvorgang werden ca. 30 - 50 g Schmelzkleber 33 je m² auf das PVC-Band 4 aufgetragen. Dies erfolgt bei einer Temperatur von ca. 115°C. Die beiden Bänder 24 und 4 gelangen in der fünften Station 34 in Anlage und werden mittels Andruck- und Fixierrollen 35 fest aneinander gepreßt, wodurch nach dem Auskühlen eine sichere Verbindung besteht. Nach der fünften Station 34 verläßt die fast fertige Rolladenlamelle 1 die Profilbeschichtungsmaschine 28 und gelangt zur sechsten Station 36, nämlich einem Abläng- und Arretierstanzwerkzeug 37, wo die einzelnen Roll adenlamellen 1 automatisch in den gewünschten Längen abgestanzt und vorarretiert werden. Nach Abschluß der Vorarretierung werden die Rolladenlamellen 1 auf einem Ablagetisch 38 abgelegt und gegebenenfalls ins Lager transportiert oder weiterbearbeitet.

Wie ohne weiteres erkennbar ist, können mit derselben Rollbeschichtungsanlage 21 auch Rolladenlamellen ohne PVC-Band hergestellt werden, wenn die Stationen der Profilbeschichtungsmaschine 28 durchlaufen werden, ohne daß die entsprechenden Bearbeitungsgänge durchgeführt werden. Ferner können durch Austauschen der Rollen beide Rolladenlamellen 1, 11 gemäß dem ersten und dem zweiten Ausführungsbeispiel auf derselben Rollbeschichtungsanlage 21 hergestellt werden. Je nach Konstruktion kann dies sogar durch Vertauschen der Rollensätze innerhalb der Rollbeschichtungsanlage 21 erfolgen, wodurch kein zusätzlicher Lagerraum erforderlich ist.

## Patentansprüche

1. Rolladenlamelle (1; 11) mit einem Metallteil (2; 12), mit welchem zumindest teilweise ein aus einem PVC-Band bestehendes Kunststoffelement (3; 13) fest verbunden ist, **dadurch gekennzeichnet, daß**
daß das PVC-Band (4; 14) mit einem Glasfaser-, Kohlefaser- oder Textilgewebe verbunden ist, und däß das PVC-Band (4; 14) unter Druckeinwirkung mittels eines Schmelzklebers (33) auf dem Metallteil (2; 12) aufgeklebt ist.

2. Rolladenlamelle (1; 11) nach Anspruch 1, **dadurch gekennzeichnet, daß** das Metallteil (2; 12) ein Stück eines rollgeformten Aluminiumbandes (5; 15, 24) ist.

3. Rolladenlamelle (1; 11) nach einem der vorhergehenden Ansprüche, **dadurch gekennzeichnet, daß** die Ränder (6; 16) des PVC-Bandes (4; 14) bis dicht an hakenförmige Bereiche (7, 8; 17, 18) des Metallteils (2; 12) heranreichen.

4. Rolladenlamelle (1; 11) nach einem der vorhergehenden Ansprüche, **dadurch gekennzeichnet, daß** die Außenseite des PVC-Bandes (4; 14) mit einer Beschichtung versehen ist.

5. Rolladenlamelle (1; 11) nach einem der vorhergehenden Ansprüche, **dadurch gekennzeichnet, daß** das Metallteil (2; 12) beidseitig mit einer Beschichtung versehen ist.

6. Rolladenlamelle (1; 11) nach Anspruch 4 oder 5, **dadurch gekennzeichnet, daß** die Beschichtung eine Farbbeschichtung (9; 19) ist.

7. Rolladenlamelle (1; 11) nach einem der vorhergehenden Ansprüche, **dadurch gekennzeichnet, daß** das Metallteil (2; 12) 0,42 ± 0,04 mm dick ist.

8. Rolladenlamelle (1; 11) nach einem der vorhergehenden Ansprüche, **dadurch gekennzeichnet, daß** das PVC-Band (4; 14) 0,60 ± 0,02 mm dick ist.

9. Verfahren zur Herstellung einer Rolladenlamelle (1, 11) nach einem der Ansprüche 1 bis 8 mit einem Metallteil (2, 12), das zumindest teilweise mit einem Kunststoffelement (3, 13) verbunden wird, **dadurch gekennzeichnet, daß** das Metallteil (2, 12) ein Metallband und das Kunststoffelement (3, 13) ein PVC-Band (4, 14) ist, wobei das Metallband in einer Rollformmaschine (26) rollgeformt wird, ohne Unterbrechung der Längsbewegung nach dem Durchlaufen eines Heißluftgebläses (30) oder einer Heizvorrichtung mit dem einseitig mit einem Schmelzkleber (33) beschichteten PVC-Band (4, 14) in Anlage gelangt, die beiden Bänder mittels Andruck- und Fixierrollen (35) fest miteinander verbunden werden und danach die fertigen Rolladenlamellen (1; 11) ohne Unterbrechung der Längsbewegung abgelängt werden.

10. Verfahren nach Anspruch 9, **dadurch gekennzeichnet, daß** das Metallband ein Aluminiumband (5; 15, 24) ist, daß das Aluminiumband (5; 15, 24) im Heißluftgebläse (30) oder der Heizvorrichtung auf eine Temperatur von 30 °C vorgewärmt wird, und daß das Auftragen des Schmelzklebers (33) auf das PVC-Band (4; 14) bei einer Temperatur von 110 bis 120 °C erfolgt.

11. Verfahren nach einem der Ansprüche 9 oder 10, **dadurch gekennzeichnet, daß** 30 - 50 g Schmelzkleber (33) je m² PVC-Band (4; 14) aufgetragen werden.

12. Verfahren nach einem der Ansprüche 9 bis 11, **dadurch gekennzeichnet, daß** der Schmelzkleber (33) ein reaktiver Schmelzkleber auf PUR-Basis ist.

13. Verfahren nach einem der Ansprüche 10 bis 12, **dadurch gekennzeichnet, daß** nach der Rollumformung ein Primer auf das Aluminiumband (5; 15; 24) aufgebracht wird, der während des Durchlaufens durch das Heißluftgebläse (30) oder die Heizvorrichtung getrocknet wird.

14. Verfahren nach Anspruch 13, **dadurch gekennzeichnet, daß** der Primer ein Mittel auf Polykondensationsharzbasis ist, welches mit chloriertem Kohlenwasserstoff als Lösungsmittel versehen ist.

15. Verfahren nach einem der Ansprüche 9 bis 14, **dadurch gekennzeichnet, daß** das PVC-Band (4; 14) nach dem Fixieren mit einer Beschichtung versehen wird.

16. Rollbeschichtungsanlage (21) für Rolladenlamellen (1, 11) mit einer ersten Station (22), die der Lagerung eines Coils (23) mit einem Metallband dient, einer zweiten Station (25), die im wesentlichen aus einer Rollformmaschine (26) besteht, einer ein PVC-Band (4; 14) und einen Schmelzkleber (33) aufweisenden Profilbeschichtungsmaschine (28), in der das Metallband mittels des Schmelzklebers (33) mit dem PVC-Band (4; 14) beschichtet wird, wobei die beiden Bänder mittels Andruck- und Fixierrollen (35) fest aneinandergepreßt werden, und einer sechsten Station (36), nämlich einem kontinuierlich arbeitenden Abläng- und Arretierstanzwerkzeug (37), wobei alle drei Stationen (22, 25, 36) in einer Reihe angeordnet sind.

17. Rollbeschichtungsanlage (21) nach Anspruch 16, **dadurch gekennzeichnet, daß** nach der Rollformmaschine (26) eine dritte Station (27) angeordnet ist, die dazu dient, einen Primer auf das Metallband aufzutragen.

18. Rollbeschichtungsanlage (21) nach Anspruch 17, **dadurch gekennzeichnet, daß** der dritten Station (27) ein Heißluftgebläse (30) oder eine Heizvorrichtung nachgeordnet ist.

19. Rollbeschichtungsanlage (21) nach einem der Ansprüche 16 bis 18, **dadurch gekennzeichnet, daß** sämtliche Werkzeuge und Rollen derart ausgebildet sind, daß die Rollbeschichtungsanlage (21) durch entsprechendes Vertauschen der Werkzeuge und Rollen sowohl zur Herstellung von Rolladenlamellen (1), bei denen das Kunststoffband im konkaven Bereich des Metallbandes angeordnet ist, als auch zur Herstellung von Rolladenlamellen (11), bei denen das Kunststoffband im konvexen Bereich des Metallbandes angeordnet ist, geeignet sind.

20. Rollbeschichtungsanlage (21) nach einem der Ansprüche 16 bis 19, **dadurch gekennzeichnet, daß** in der oder im Anschluß an die Profilbeschichtungsmaschine (28) eine der Beschichtung des Metallbandes mit dem Kunststoffband nachgeordnete Vorrichtung zum Beschichten einer Seite der Rolladenlamellen (1, 11) vorgesehen ist.

## Claims

1. Roller shutter lamella (1; 11) having a metal part (2; 12), with which a plastics material element (3; 13) comprising a PVC strip is at least partly fixedly joined, **characterised in that** the PVC strip (4; 14) is joined to a glass fibre, carbon fibre or textile fabric, and **in that** the PVC strip (4; 14) is adhesively secured to the metal part (2; 12) under the action of pressure by means of a fusible adhesive (33).

2. Roller shutter lamella (1; 11) according to claim 1, **characterised in that** the metal part (2; 12) is a piece of roll-formed aluminium strip (5; 15, 24).

3. Roller shutter lamella (1; 11) according to one of the preceding claims, **characterised in that** the edges (6; 16) of the PVC strip (4; 14) extend right up to hook-like regions (7, 8; 17, 18) of the metal part (2; 12).

4. Roller shutter lamella (1; 11) according to one of the preceding claims, **characterised in that** the outside of the PVC strip (4; 14) is provided with a coating.

5. Roller shutter lamella (1; 11) according to one of the preceding claims, **characterised in that** the metal part (2; 12) is provided on both sides with a coating.

6. Roller shutter lamella (1; 11) according to claim 4 or 5, **characterised in that** the coating is a colour coating (9; 19).

7. Roller shutter lamella (1; 11) according to one of the preceding claims, **characterised in that** the metal part (2; 12) is 0.42 ± 0.04 mm thick.

8. Roller shutter lamella (1; 11) according to one of the preceding claims, **characterised in that** the PVC strip (4; 14) is 0.60 ± 0.02 mm thick.

9. Method for the manufacture of a roller shutter lamella (1; 11) according to one of claims 1 to 8 having a metal part (2; 12) that is at least partly joined to a plastics material element (3; 13), **characterised in that** the metal part (2; 12) is a metal strip and the plastics material element (3; 13) is a PVC strip (4; 14), wherein the metal strip is roll-formed in a roll forming machine (26), after passing through a hot air fan (30) or a heating device comes into contact, without interruption in its longitudinal travel, with the PVC strip (4, 14) coated on one side with a fusible adhesive (33), the two strips are firmly joined to one another by means of pressure rollers and fixing rollers (35) and thereafter the finished roller shutter lamellae (1; 11) are cut to length without interruption in the longitudinal travel.

10. Method according to claim 9, **characterised in that** the metal strip is an aluminium strip (5; 15, 24), **in that** the aluminium strip (5; 15, 24) is pre-heated in the hot air fan (30) or the heating device to a temperature of 30°C, and **in that** the fusible adhesive (33) is applied to the PVC strip (4; 14) at a temperature of from 110 to 120°C.

11. Method according to one of claims 9 and 10, **characterised in that** 30-50 g of fusible adhesive (33) is applied per m² of PVC strip (4; 14).

12. Method according to one of claims 9 to 11, **characterised in that** the fusible adhesive (33) is a reactive fusible adhesive on a PUR basis.

13. Method according to one of claims 10 to 12, **characterised in that** after the roll reforming, a primer is applied to the aluminium strip (5; 15, 24), the primer being dried during passage through the hot air fan (30) or the heating device.

14. Method according to claim 13, **characterised in that** the primer is an agent on a poly-condensation resin basis, which is provided with chlorinated hydrocarbon as solvent.

15. Method according to one of claims 9 to 14, **characterised in that** the PVC strip (4; 14) is provided with a coating after fixing.

16. Roll coating installation (21) for roller shutter lamellae (1, 11) having a first station (22), which is used for storing a coil (23) with a metal strip, a second station (25), which essentially comprises a roll forming machine (26), a profile coating machine (28) having a PVC strip (4; 14) and a fusible adhesive (33), in which the metal strip is coated by means of the fusible adhesive (33) with the PVC band (4; 14), wherein the two strips are firmly pressed against one another by means of pressure rollers and fixing rollers (35), and a sixth station (36), namely, a continuously operating cutting and stopping and punching tool (37), wherein all three stations (22, 25, 36) are arranged in a row.

17. Roll coating installation (21) according to claim 16, **characterised in that** a third station (27) is arranged after the roll forming machine (26), the third station serving for application of a primer to the metal strip.

18. Roll coating installation (21) according to claim 17, **characterised in that** a hot air fan (30) or a heating device is arranged downstream of the third station (27).

19. Roll coating installation (21) according to one of claims 16 to 18, **characterised in that** all tools and rollers are constructed so that, by corresponding interchange of tools and rolls, the roll coating installation (21) is suitable both for manufacture of roller shutter lamellae (1) in which the plastics material strip is arranged in the concave region of the metal strip, and for the manufacture of roller shutter lamellae (11) in which the plastics material strip is arranged in the convex region of the metal strip.

20. Coil coating installation (21) according to one of claims 16 to 19, **characterised in that** a device for coating one side of the roller shutter lamellae (1, 11) is provided in or following the profile coating machine (28), the device being arranged downstream of the coating of the metal strip with the plastics material strip.

## Revendications

1. Lamelle de volet roulant (1 ; 11) comprenant une pièce métallique (2 ; 12), avec laquelle est assemblé fermement au moins en partie un élément en matière plastique (3 ; 13) formé par une bande de PVC, **caractérisée en ce que** la bande de PVC (4 ; 14) est assemblée avec un tissu en fibres de verre, en fibres de carbone ou en textile, et **en ce que** la bande de PVC (4 ; 14) est collée, sous l'effet d'une pression, sur la pièce métallique (2 ; 12) au moyen d'une colle thermofusible.

2. Lamelle de volet roulant (1 ; 11) selon la revendication 1, **caractérisée en ce que** la pièce métallique (2 ; 12) est un morceau d'une bande d'aluminium (5 ; 15, 24) à profil arrondi.

3. Lamelle de volet roulant (1 ; 11) selon une des revendications précédentes, **caractérisée en ce que** les bords (6 ; 16) de la bande de PVC (4 ; 14) s'avancent jusqu'à proximité de zones (7, 8 ; 17, 18) en forme de crochets de la pièce métallique (2 ; 12).

4. Lamelle de volet roulant (1 ; 11) selon une des revendications précédentes, **caractérisée en ce qu'**un revêtement est déposé sur la face extérieure de la bande de PVC (4 ; 14).

5. Lamelle de volet roulant (1 ; 11) selon une des revendications précédentes, **caractérisée en ce qu'**un revêtement est déposé sur les deux faces de la pièce métallique (2 ; 12).

6. Lamelle de volet roulant (1 ; 11) selon la revendication 4 ou S, **caractérisée en ce que** le revêtement est un revêtement de peinture (9 ; 19).

7. Lamelle de volet roulant (1 ; 11) selon une des revendications précédentes, **caractérisée en ce que** la pièce métallique (2 ; 12) a une épaisseur de 0,42 ± 0,04 mm.

8. Lamelle de volet roulant (1 ; 11) selon une des revendications précédentes, **caractérisée en ce que** la bande de PVC (4 ; 14) a une épaisseur de 0,60 ± 0,02 mm.

9. Procédé de fabrication d'une lamelle de volet roulant (1, 11) selon une des revendications 1 à 8, comprenant une pièce métallique (2, 12), avec laquelle est assemblé fermement au moins en partie un élément en matière plastique (3, 13), **caractérisé en ce que** la pièce métallique (2, 12) est une bande de métal et l'élément en matière plastique (3, 13) est une bande de PVC (4, 14), la bande de métal étant réalisée avec un profil arrondi dans une machine de formage à rouleaux (26), étant amenée, à la sortie d'une soufflerie à air chaud (30) ou d'un dispositif de chauffage, sans interruption du transport longitudinal, en appui contre la bande de PVC (4, 14) revêtue sur une face de la colle thermofusible (33), les deux bandes étant assemblées fermement l'une contre l'autre au moyen de rouleaux de pression et de fixage (35) et les lamelles de volet roulant (1 ; 11) finies étant coupées à longueur sans interruption du transport longitudinal.

10. Procédé selon la revendication 9, **caractérisé en ce que** la bande de métal est une bande d'aluminium (5 ; 15, 24), **en ce que** la bande d'aluminium (5 ; 15, 24) est préchauffée à une température de 30°C dans la soufflerie à air chaud (30) ou le dispositif de chauffage, et **en ce que** la colle thermofusible (33) est déposée sur la bande de PVC (4 ; 14) sous une température de 110 à 120°C.

11. Procédé selon la revendication 9 ou 10, **caractérisé en ce que** la colle thermofusible (33) est déposée à raison de 30-50 g par m² de bande de PVC (4 ; 14).

12. Procédé selon une des revendications 9 à 11, **caractérisé en ce que** la colle thermofusible (33) est une colle thermofusible réactive à base de polyuréthanne.

13. Procédé selon une des revendications 10 à 12, **caractérisé en ce que**, après le formage du profil arrondi, une couche de fond est déposée sur la bande d'aluminium (5 ; 15, 24), laquelle est séchée pendant le transport continu à travers la soufflerie à air chaud (30) ou le dispositif de chauffage.

14. Procédé selon la revendication 13, **caractérisé en ce que** la couche de fond est un agent à base de résine de polycondensation, qui contient un solvant formé par un hydrocarbure chloré.

15. Procédé selon une des revendications 9 à 14, **caractérisé en ce qu'**un revêtement est déposé sur la bande de PVC (4 ; 14) après le fixage.

16. Installation de revêtement à rouleaux (21) pour lamelles de volet roulant (1, 11), comprenant un premier poste (22), utilisé pour le stockage d'une bobine (23) munie d'une bande de métal, un deuxième poste (25), formé sensiblement par la machine de formage à rouleaux (26), une machine de revêtement des profilés (28) comprenant une bande de PVC (4 ; 14) et une colle thermofusible (33), dans laquelle la bande de métal est revêtue de la bande de PVC (4 ; 14) au moyen de la colle thermofusible (33), les deux bandes étant serrées fermement l'une contre l'autre au moyen de rouleaux de pression et de fixage (35), et un sixième poste (36), à savoir un outil de coupe à longueur et de découpe à pointeau (37) travaillant en continu, les trois postes (22, 25, 36) étant disposés en ligne.

17. Installation de revêtement à rouleaux (21) selon la revendication 16, **caractérisée en ce qu'**en aval de la machine de formage à rouleaux (26) est disposé un troisième poste (27) qui est utilisé pour déposer une couche de fond sur la bande de métal.

18. Installation de revêtement à rouleaux (21) selon la revendication 17, **caractérisée en ce qu'**une soufflerie à air chaud (30) ou un dispositif de chauffage est disposé en aval du troisième poste (27).

19. Installation de revêtement à rouleaux (21) selon une des revendications 16 à 18, **caractérisée en ce que** tous les outils et rouleaux sont conçus de telle sorte que l'installation de revêtement à rouleaux (21), après un remplacement approprié des outils et rouleaux, peut être utilisée pour la fabrication de lamelles de volet roulant (1), dans lesquelles la bande de matière plastique est agencée dans la zone concave de la bande de métal, de même que pour la fabrication de lamelles de volet roulant (11), dans lesquelles la bande de matière plastique est agencée dans la zone convexe de la bande de métal.

20. Installation de revêtement à rouleaux (21) selon une des revendications 16 à 19, **caractérisé en ce que**, dans ou à la sortie de la machine de revêtement à rouleaux (28), il est prévu un dispositif, qui est monté en aval du processus de revêtement de la bande de métal avec la bande en matière plastique et qui est destiné à déposer un revêtement sur une face des lamelles de volet roulant (1, 11).
